(19) Europäisches Patentamt
European Patent Office
Office européen des brevets

(11) **EP 3 717 804 B1**

(12) **EUROPÄISCHE PATENTSCHRIFT**

(45) Veröffentlichungstag und Bekanntmachung des Hinweises auf die Patenterteilung:
**21.04.2021  Patentblatt 2021/16**

(21) Anmeldenummer: **19712553.7**

(22) Anmeldetag: **18.03.2019**

(51) Int Cl.:
**F16J 9/20** *(2006.01)*

(86) Internationale Anmeldenummer:
**PCT/EP2019/056662**

(87) Internationale Veröffentlichungsnummer:
**WO 2019/192828 (10.10.2019 Gazette 2019/41)**

(54) **KOLBENRING UND KOLBENRING/KOLBEN-KOMBINATION MIT VERBESSERTEN VERSCHLEISSEIGENSCHAFTEN**

PISTON RING AND PISTON RING/PISTON COMBINATION WITH IMPROVED WEAR PROPERTIES

BAGUE DE PISTON ET COMBINAISON DE BAGUE DE PISTON ET DE PISTON À PROPRIÉTÉS D'USURE AMÉLIORÉES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.04.2018  DE 102018107793**

(43) Veröffentlichungstag der Anmeldung:
**07.10.2020  Patentblatt 2020/41**

(73) Patentinhaber: **Federal-Mogul Burscheid GmbH 51399 Burscheid (DE)**

(72) Erfinder:
• **RUCH, Fabian**
  **51375 Leverkusen (DE)**
• **GRAY, Nigel**
  **51381 Leverkusen (DE)**
• **NICKISCH, Oliver**
  **51399 Burscheid (DE)**

(74) Vertreter: **Kurig, Thomas Becker & Kurig Partnerschaft Patentanwälte PartmbB Bavariastrasse 7 80336 München (DE)**

(56) Entgegenhaltungen:
**EP-A1- 2 045 488       DE-A1- 3 511 851**
**JP-A- 2003 328 852     US-A1- 2004 012 153**

**Beschreibung**

Die vorliegende Erfindung betrifft Kolbenringe für Kolbenmaschinen insbesondere für Verbrennungsmotoren.

Bisher sind sehr viele verschiedene Arten von Kolbenringen bekannt, siehe z.B. EP 2 045 488 A1.

Es ist jedoch immer noch wünschenswert einen Kolbenring zur Verfügung zu haben, der verbesserte Eigenschaften bezüglich Abrieb und verringertem Blowby aufweist.

Gemäß einem ersten Aspektes der vorliegenden Erfindung wird ein Kolbenring mit verbesserten Verschleißeigenschaften gemäß Anspruch 1 bereitgestellt.

Eine Ausführungsform des Kolbenrings weist einen mittleren Tangentenwinkel des oberen Bereichs der Laufflächenkontur auf, der zwischen 2 bis 40, bevorzugt 4 bis 30 mal und weiter bevorzugt 10 bis 20 mal so groß ist wie ein mittlerer Tangentenwinkel des mittleren Bereichs. Der Tangentenwinkel ist dabei definiert als der Winkel einer Tangente an den Krümmungsradius $R_o$ oder $R_m$, deren Fußpunkt sich aus der Winkelhalbierenden der Erstreckung der Krümmung des oberen bzw. mittleren Bereichs ergibt, zu der Axialrichtung des Kolbenrings. Der obere bzw. mittlere Bereich weist jeweils in einem Winkelbereich einen Krümmungsradius auf.

Gemäß einer weiteren Ausführungsform des Kolbenrings weist der obere Bereich der Laufflächenkontur einen Krümmungsradius $R_o$ auf, der zwischen dem Ringradius R und 4R liegt, und der mittlere Bereich der Laufflächenkontur weist einen Krümmungsradius $R_m$ auf, der zwischen dem Ringradius R und 4R liegt, und der untere Bereich weist einen Krümmungsradius $R_u$ auf, der kleiner ist als 1/2 R.

Bei einer anderen Ausführungsform des Kolbenrings weist der obere Bereich der Laufflächenkontur einen Krümmungsradius $R_o$ auf, der zwischen dem Ringradius R und 4R liegt, der mittlere Bereich der Laufflächenkontur weist einen Krümmungsradius $R_m$ auf, der zwischen dem Ringradius R und 4R liegt, und der untere Bereich weist einen Krümmungsradius $R_u$ auf, der kleiner ist als 1/2 R. Der untere Bereich hat also einen deutlich geringeren Krümmungsradius als die beiden oberen Bereiche.

Bei einer zusätzlichen Ausführung des Kolbenrings weist der obere Bereich der Laufflächenkontur einen Krüm-mungsradius $R_o$ auf, der zwischen dem Ringradius R und 2R liegt, der mittlere Bereich der Laufflächenkontur weist einen Krümmungsradius $R_m$ auf, der zwischen dem Ringradius R und 2R liegt, und der untere Bereich weist einen Krümmungsradius $R_u$ auf, der kleiner ist als eine Ringhöhe h. Die Ringhöhe ist als ein größter Abstand zwischen der unteren Ringflanke und der oberen Ringflanke definiert. Es werden durch diese Ausführungen auch Kolbenringe abgedeckt, deren Lauffläche eine (Teil-) Oberfläche einer Spindel bis Horntorus mit einem Verhältnis R/r zwischen 1 und 2 umfassen.

Eine weitere Ausführungsform des Kolbenrings zeichnet sich dadurch aus, dass der obere Bereich der Lauf-flächenkontur einen Krümmungsradius $R_o$ aufweist, der zwischen dem Ringradius R und 1,5R liegt, der mittlere Bereich der Laufflächenkontur einen Krümmungsradius $R_m$ aufweist, der zwischen dem Ringradius R und 1,5R liegt, und der untere Bereich einen Krümmungsradius $R_u$ aufweist, der kleiner ist als eine halbe Ringhöhe h. Damit ist der Krümmungsradius der Lauffläche direkt an den Radius des Kolbenrings angelehnt, und die Lauffläche weist eine nahezu kugelförmige Oberfläche auf. Es werden durch diese Ausführungen auch Kolbenringe abgedeckt deren Lauffläche eine (Teil-) Oberfläche eines Spindeltorus mit einem Verhältnis R/r (wobei R und r hier die Torusparameter darstellen) zwischen 1 und 1,5 aufweisen, wobei auch der Fall der Entartung zur Kugel (bei der der Torusparameter R gleich 0 ist) eingeschlossen ist, bei der der mittlere Bereich einen Teil einer Kugelfläche bildet.

Die Fläche des oberen Bereichs bildet übrigens im Allgemeinen keine Ellipsenfläche, sondern Teil einer Torus-Oberfläche.

Eine weitere Ausführungsform des vorliegenden Kolbenrings zeichnet sich dadurch aus, dass die Ringkontur in einem radialen Schnitt, zwischen dem oberen Bereich und dem mittleren Bereich einen oberen Übergangsbereich aufweist, der einen Verrundungsradius $R_{ü,om}$ aufweist der zwischen 1/100 und der Ringhöhe h, bevorzugt zwischen 1/50 und 1/5 der Ringhöhe h und weiter bevorzugt zwischen 1/30 und einem 1/10 der Ringhöhe h liegt.

Bei einer zusätzlichen Ausführungsform des Kolbenrings weist die Ringkontur in einem radialen Schnitt zwischen dem oberen Bereich und dem mittleren Bereich einen oberen Übergangsbereich auf, der einen Verrundugsradius $R_{ü,om}$ aufweist, der zwischen 0,002 und 0,5mm, bevorzugt zwischen 0,05 und 0,4mm und weiter bevorzugt zwischen 0,1 und 0,3mm beträgt.

Bei einer weiteren Ausführung des Kolbenrings weist die Ringkontur in einem radialen Schnitt zwischen dem mittleren Bereich und dem unteren Bereich einen unteren Übergangsbereich auf, der einen Verrundungsradius $R_{ü,mu}$ zeigt, der zwischen 1/100 und der Ringhöhe h, bevorzugt zwischen 1/50 und 1/5 der Ringhöhe h und weiter bevorzugt zwischen 1/30 und einem 1/10 der Ringhöhe h beträgt. Auch hier wird die Größe des Verrundungsradius durch eine Abmessung des Kolbenrings definiert.

Bei einer weiteren Ausführung des Kolbenrings weist die Ringkontur in einem radialen Schnitt zwischen dem oberen Bereich und dem mittleren Bereich einen oberen Übergangsbereich auf, der einen Verrundugsradius $R_{ü,om}$ aufweist, der zwischen 0,002 und 0,5mm, bevorzugt zwischen 0,05 und 0,4mm und weiter bevorzugt zwischen 0,1 und 0,3mm beträgt.

Bei einer anderen beispielhaften Ausführung des Kolbenrings ist der untere Krümmungsradius $R_u$ größer ist als der Verrundungsradius $R_{ü,mu}$ und/oder $R_{ü,om}$, bevorzugt mindestens 5 mal so groß ist wie $R_{ü,mu}$ und/oder $R_{ü,om}$ und weiter bevorzugt mindestens 10 mal so groß ist als $R_{ü,mu}$ und/oder $R_{ü,om}$.

Bei einer anderen beispielhaften Ausführungsform des Kolbenrings ist der mittlere Krümmungsradius $R_m$ größer ist als der obere Krümmungsradius $R_o$. Bevorzugt ist der mittleren Krümmungsradius 2 bis 20 mal so groß ist wie $R_o$ und weiter bevorzugt mindestens 4 bis 10 mal so groß wie $R_o$.

Bei einer zusätzlichen beispielhaften Ausführung des Kolbenrings erstreckt sich der mittlere Bereich zwischen 50 und 95 bevorzugt zwischen 60 und 90 und weiter bevorzugt zwischen 70 und 85% der Höhe h des Kolbenrings. Der Großteil der Kolbenring-Mantelfläche wird dabei durch den mittleren Teil gebildet, der dazu bestimmt ist tatsächlich mit einer Zylinderinnenfläche in Kontakt zu stehen.

Gemäß eines weiteren Aspekts der vorliegenden Erfindung wird eine Kolbenring-/Kolbenkombination mit verbesserten Verschleißeigenschaften des Kolbenrings bereitgestellt. Die Kolbenring-/Kolbenkombination umfasst einen Kolben mit einer Kolbenringnut und einem Kolbenring wie er vorstehend beschrieben ist. Die Kolbenringnut weist eine Kolbenringnutbreite B auf, und der Kolbenring weist eine radiale Dicke oder auch radiale Wandstärke W auf. Ein Betrag eines Winkel $\alpha$ zwischen einer Axialrichtung und einer gemittelten Tangente (bzw. mittleren Steigung) des mittleren Bereichs ist dabei kleiner gleich dem inversen Tangens eines Quotienten, bei dem der Dividend durch die Differenz zwischen der Kolbenringnutbreite B und der Ringhöhe h und der Divisor durch die radiale Dicke W des Kolbenrings gebildet wird. Der Dividend ist demnach durch das Axialspiel des Kolbenrings in der Kolbenringnut definiert, während der Divisor der radialen Tiefe des Kolbenrings entspricht. Damit wird die mittlere Steigung des mittleren Bereichs des Kolbenrings mit einem möglichen Verkippungsgrad bzw. Twisten des Kolbenrings in der Kolbenringnut in Verbindung gebracht. Es ist dabei ebenfalls möglich einen negativen Winkel zu erhalten, sofern durch ein Twisten des Rings ein positiver Winkel erreicht wird, mit dem Öl in einem Spalt zwischen Kolben und Zylinder bei einer Abwärtsbewegung des Kolbens abgestreift werden kann.

Dieser Aspekt kann ebenfalls durch die folgende Gleichung beschrieben werden:

$$|\alpha| \leq \tan^{-1}\left(\frac{h_{axial}}{a_{ring}}\right) = \tan^{-1}\left(\frac{axiale\ clearance}{Wandstärke}\right)$$

Mit anderen Worten ist der Betrag des Winkels $\alpha$ kleiner gleich einem maximalen Twistwinkels des Kolbenrings in der Kolbenringnut.

Bei einer anderen beispielhaften Ausführung der Kolbenring-/Kolbenkombination liegt ein Betrag eines Winkel $\beta$ zwischen einer Axialrichtung und einer gemittelten Tangente (bzw. einer mittleren Steigung) des oberen Bereichs über einer Summe aus einem Wert $\alpha$ und einem Wert $\delta$, der zwischen 30' bis 180' beträgt. Damit ist die gemittelte Tangente des mittleren Bereichs um ein halbes Winkelgrad bis drei Winkelgrad schwächer zur Axialrichtung geneigt als die gemittelte Tangente des oberen Bereichs. Der obere und untere Bereich bilden dabei (gemittelt) eine Art Knick-Kegelstumpf.

Im Folgenden wird die vorliegende Erfindung anhand von schematischen Darstellungen beispielhafter Ausführungsformen beschrieben. $\infty$

Figur 1 zeigt einen Schnitt durch eine Laufflächenkontur eines erfindungsgemäßen Kolbenrings gemäß einer ersten Ausführungsform.

Figur 2 stellt einen Schnitt durch eine Laufflächenkontur eines erfindungsgemäßen Kolbenrings gemäß einer weiteren Ausführungsform dar.

Figur 3 zeigt die Winkelverhältnisse zwischen einem oberen Bereich und einem mittleren Bereich anhand einer Laufflächenkontur eines erfindungsgemäßen Kolbenrings gemäß einer weiteren Ausführungsform.

Figur 4 stellt eine Aufsicht auf einen erfindungsgemäßen Kolbenring dar, um den Kolbenringradius zu verdeutlichen.

Im Folgenden werden sowohl in der Zeichnung als auch in den Figuren gleiche oder ähnliche Bezugszeichen verwendet um auf gleiche oder ähnliche Komponenten und Elemente Bezug zu nehmen.

Im Folgenden wird nicht zwischen den jeweiligen Krümmungsradien des oberen, mittleren und unteren Bereichs und den jeweiligen Bereichen unterschieden, da diese Bereiche jeweils durch ihre Krümmungsradien definiert sind. Die Bezugszeichen $R_o$, $R_m$ und $R_u$ stehen daher sowohl für einen axialen Bereich der Laufflächenkontur als auch für deren jeweiligen n Wert des Krümmungsradius.

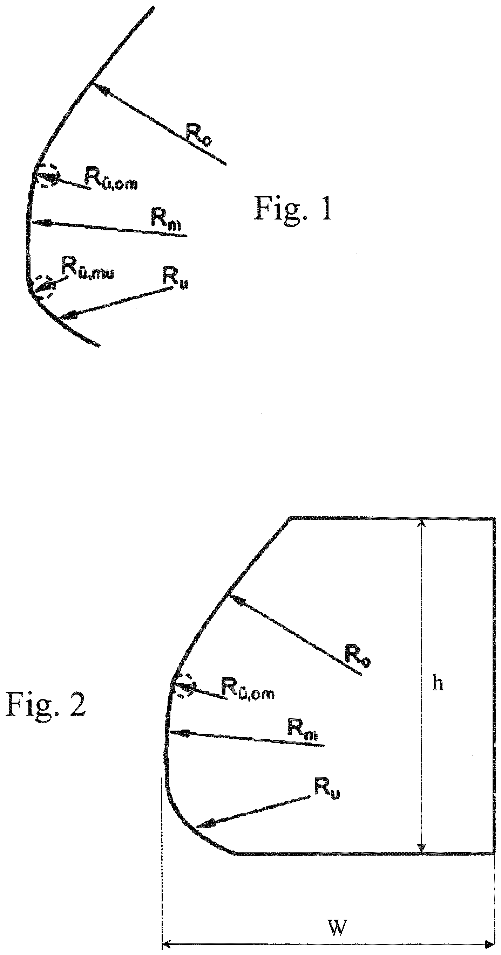

Figur 1 zeigt einen Schnitt durch eine Laufflächenkontur eines erfindungsgemäßen Kolbenrings gemäß einer ersten Ausführungsform. In der Figur 1 weist der obere Abschnitt der Kontur der Lauffläche einen Krümmungsradius $R_o$ auf, der zwischen dem Ringradius bzw. halben Ringdurchmesser des eingebauten Kolbenrings und $\infty$ liegt. Der obere Bereich der Laufflächenkontur ist dabei nach innen geneigt, und bildet einen Ausschnitt einer Torusoberfläche. Der obere Bereich der Laufflächenkontur ist am weitesten dem Brennraum zugewandt. Unterhalb des oberen Bereichs $R_o$ befindet sich ein oberer Übergangsbereich $R_{ü,om}$ der eine Übergang zu einem mittleren Bereich Rm des Kolbenrings bildet. Der obere Übergansbereich $R_{ü,om}$ bildet ebenfalls ein Teil einer Torusoberfläche. Der Krümmungsradius $R_{ü,om}$ ist wesentlich kleiner als der Krümmungsradius des oberen Bereichs. Der Krümmungsradius $R_{ü,om}$ ist wesentlich ebenfalls mindestens um einen Faktor 10 kleiner als eine Höhe h des Kolbenrings. Unterhalb des oberen Übergangsbereich $R_{ü,om}$ schließt sich ein mittlerer Bereich Rm an, der tatsächlich mit einer Zylinderinnenseite in Kontakt stehen soll. Der mittlere Bereich der Kontur der Lauffläche weist einen Krümmungsradius $R_o$ auf, der zwischen dem Ringradius bzw. halben Ringdurchmesser des eingebauten Kolbenrings und $\infty$ liegt. Unterhalb des mittleren Bereichs $R_m$ schließt sich in Figur 1 ein weiterer Übergangsbereich, ein unterer Übergangsbereich $R_{ü,mu}$ an, der einen Übergang zu einem unteren Laufflächenkonturabschnitt $R_u$ bildet. Wie der obere Übergansbereich $R_{ü,om}$ weist auch der untere Übergangsbereich $R_{ü,mu}$ einen Krümmungsradius auf, der in Bezug auf die Höhe des Kolbenrings klein ist, und maximal 1/10 der Höhe h beträgt. Unterhalb des unteren Übergangsbereichs schließt sich ein unterer Bereich $R_u$ der Laufflächenkontur an, dessen Krümmungsradius kleiner ist als der Radius des Kolbenrings in einem eingebauten Zustand.

Je nach Belastungsszenario kann hier durch die Formgebung ein Verschleiß so verteilt werden, dass er insgesamt weniger stark ausfällt als beispielsweise bei herkömmlichen Minuten- oder Nasen-Minutenringen.

Figur 2 stellt einen Schnitt durch eine Laufflächenkontur eines erfindungsgemäßen Kolbenrings gemäß einer weiteren Ausführungsform dar. In der Figur 2 weisen der obere Bereich $R_o$ und der mittlere Bereich $R_m$ deutlich größere Krümmungsradien auf als bei der Ausführung der Figur 1. Der obere Übergangsbereich $R_{ü,om}$ weist wie im Fall der Figur 1 einen relativ kleinen Wert auf. Der untere Bereich $R_m$ der Laufflächenkontur weist einen im Vergleich zur Figur 1 kleineren Krümmungsradius auf. Der mittlere Bereich $R_m$ der Laufflächenkontur geht übergangslos in den unteren Bereich $R_u$ der Laufflächenkontur über. Der mittlere Bereich $R_m$ und der untere Bereich $R_u$ der Laufflächenkontur treffen sich an einem Punkt bei dem die jeweiligen Tangenten des mittleren Bereichs $R_m$ und des unteren Bereichs $R_u$ zusammenfallen. Durch den deutlich kleineren Krümmungsradius kann auf den unteren Übergangsbereich wie er in der Figur 1 verwendet wird verzichtet werden. Der Krümmungsradius des unteren Bereichs $R_u$ ist dabei mindestens 10 Mal kleiner als der des mittleren Bereichs. Der Krümmungsradius des unteren Bereichs $R_u$ kann aber auch mindestens 100-mal kleiner sein als der des mittleren Bereichs sein. In der Figur 2 geht der mittlere Bereich $R_m$ der Laufflächenkontur stetig und tangentenstetig in den unteren Bereich $R_u$ der Laufflächenkontur über.

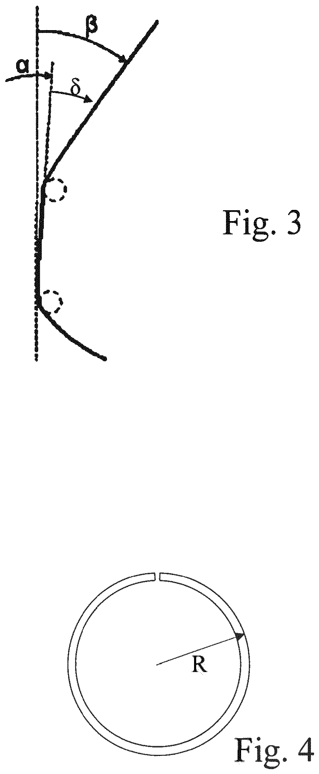

Figur 3 zeigt die Winkelverhältnisse zwischen einem oberen Bereich $R_o$ und einem mittleren Bereich $R_m$ anhand einer Laufflächenkontur eines erfindungsgemäßen Kolbenrings gemäß einer weiteren Ausführungsform. In der Figur weist der obere Bereich $R_o$ einen nahezu unendlich großen Krümmungsradius auf. Durch den großen Krümmungsradius des oberen Bereichs $R_o$ fallen alle Tangenten an dem oberen Bereich $R_o$ der Laufflächenkontur in erster Näherung zusammen. In Figur 3 weist der mittlere Bereich $R_m$ ebenfalls einen nahezu unendlich großen Krümmungsradius auf. Der große Krümmungsradius des mittleren Bereichs $R_m$ bewirkt dass alle Tangenten dieses Abschnitts der Laufflächenkontur in erster Näherung zusammenfallen. Zwischen dem oberen Bereich $R_o$ und dem mittleren Bereich $R_m$ ist ein Übergangsbereich $R_{ü,om}$ angeordnet, der einen stetigen und tangentenstetigen Übergang zwischen dem oberen Bereich $R_o$ und dem mittleren Bereich $R_m$ erreicht. Die Formen des oberen und mittleren Bereichs bilden zusammen eine Art Knick-Kegelstumpf. Der untere Bereich $R_u$ ist über den unteren Übergangsbereich $R_{ü,mu}$ stetig und tangentenstetig mit dem mittleren Bereich $R_m$ verbunden. Die Figur zeigt dabei den unterschied der Kegelwinkel $\alpha$ des mittleren Bereichs $R_m$ der Laufflächenkontur und des Kegelwinkels $\beta$ des oberen Bereichs $R_o$ der Laufflächenkontur. Dabei liegt der Winkel $\beta$ des oberen Bereichs $R_o$ in und leicht über einem Wertebereich wie er von Minutenringen bekannt ist. Der Winkel $\alpha$ des mittleren Bereichs $R_m$ liegt deutlich unter dem Wert $\beta$ und kann in einem Bereich zwischen wenigen Winkelminuten bis 2 Winkelgrad betragen.

Figur 4 stellt eine Aufsicht in einer Axialrichtung auf einen erfindungsgemäßen Kolbenring dar, wobei die Figur den Kolbenringradius R verdeutlicht.

Bei allen vorgestellten Ausführungsformen ist die Laufflächenkontur immer stetig und tangentenstetig auch bei allen Übergängen zwischen den jeweiligen Bereichen und zwischen den jeweiligen Bereichen und den jeweiligen Übergängen.

Bezugszeichenliste

h        Ringhöhe h
R        Kolbenringradius

$R_o$      Krümmungsradius eines oberen Bereichs der Lauffflächenkontur
$R_m$      Krümmungsradius eines mittleren Bereichs der Laufflächenkontur
$R_u$      Krümmungsradius eines unteren Bereichs der Laufflächenkontur
$R_{ü,om}$      Verrundugsradius einen oberen Übergangsbereichs zwischen $R_o$ und $R_m$
$R_{ü,mu}$      Verrundugsradius einen oberen Übergangsbereichs zwischen $R_m$ und $R_u$
W      radiale Dicke bzw. radiale Wandstätke des Kolbenrings
$\alpha$      Winkel $\alpha$ zwischen einer Axialrichtung und einer gemittelten Tangente des mittleren Bereichs
$\beta$      Winkel zwischen einer Axialrichtung und einer gemittelten Tangente des oberen Bereichs
$\delta$      ein Wert der zwischen 30' bis 180'

**Patentansprüche**

1. Kolbenring mit verbesserten Verschleißeigenschaften,
wobei der Kolbenring eine Lauffläche, eine obere Ringflanke, eine untere Ringflanke und eine Innenfläche aufweist
wobei der Kolbenring einen Radius R aufweist,
wobei eine Laufflächenkontur in einem radialen Schnitt
einen oberen Bereich, einen mittleren Bereich und einen unteren Bereich umfasst, **dadurch gekennzeichnet, dass**
die Laufflächenkontur im radialen Schnitt zwischen dem oberen Bereich und dem mittleren Bereich einen oberen Übergangsbereich und zwischen dem mittleren Bereich und dem unteren Bereich einen unteren Übergangsbereich aufweist,
wobei der obere Bereich und der obere Übergangsbereich jeweils Teile von Torusoberflächen bilden,
der obere Bereich der Laufflächenkontur einen Krümmungsradius $R_o$ aufweist, der zwischen dem Ringradius R und Unendlich liegt,
der mittlere Bereich der Laufflächenkontur einen Krümmungsradius $R_m$ aufweist, der zwischen dem Ringradius R und Unendlich liegt,
der untere Bereich einen Krümmungsradius $R_u$ aufweist, der kleiner ist als der Ringradius R,
der obere Ubergangsbereich einen Verrundungsradius $R_{ü,om}$ aufweist, der zwischen 1/30 und einem 1/10 der Ringhöhe h liegt,
der untere Ubergangsbereich einen Verrundungsradius $R_{ü,mu}$ aufweist, der zwischen 1/30 und einem 1/10 der Ringhöhe h liegt.

2. Kolbenring mit verbesserten Verschleißeigenschaften gemäß Anspruch 1,
**dadurch gekennzeichnet, dass** ein mittlerer Tangentenwinkel $\beta$ des oberen Bereichs der Laufflächenkontur 2 bis 40 mal, bevorzugt 4 bis 30 mal und weiter bevorzugt 10 bis 20 mal so groß ist wie ein mittlerer Tangentenwinkel $\alpha$ des mittleren Bereichs.

3. Kolbenring mit verbesserten Verschleißeigenschaften gemäß Anspruch 1 oder 2,
**dadurch gekennzeichnet, dass**
der obere Bereich der Laufflächenkontur einen Krümmungsradius Ro aufweist, der zwischen dem Ringradius R und 4R liegt, der mittlere Bereich der Laufflächenkontur eine Krümmungsradius Rm aufweist, der zwischen dem Ringradius R und 4R liegt, der untere Bereich einen Krümmungsradius Ru aufweist, der kleiner ist als eine 1/2 R.

4. Kolbenring mit verbesserten Verschleißeigenschaften gemäß Anspruch 1, 2 oder 3, **dadurch gekennzeichnet, dass** der obere Bereich der Laufflächenkontur einen Krümmungsradius Ro aufweist, der zwischen dem Ringradius R und 2R liegt,
der mittlere Bereich der Laufflächenkontur einen Krümmungsradius Rm aufweist, der zwischen dem Ringradius R und 2R liegt, der untere Bereich einen Krümmungsradius Ru aufweist, der kleiner ist als eine Ringhöhe h.

5. Kolbenring mit verbesserten Verschleißeigenschaften gemäß einem der vorstehenden Ansprüche, **dadurch gekennzeichnet, dass** der obere Bereich der Laufflächenkontur einen Krümmungsradius Ro aufweist, der zwischen dem Ringradius R und 1,5R liegt, der mittlere Bereich der Laufflächenkontur einen Krümmungsradius Rm aufweist, der zwischen dem Ringradius R und 1,5R liegt, der untere Bereich einen Krümmungsradius Ru aufweist, der kleiner ist als eine halbe Ringhöhe h.

6. Kolbenring mit verbesserten Verschleißeigenschaften gemäß einem der vorstehenden Ansprüche, wobei der untere Krümmungsradius Ru größer ist als der Verrundungsradius $R_{ü,mu}$ und/oder $R_{ü,om}$, bevorzugt mindestens 5 mal so groß ist wie Rü,mu und/oder Rü,om und weiter bevorzugt mindestens 10 mal so groß ist als $R_{ü,mu}$ und/oder $R_{ü,om}$.

7. Kolbenring mit verbesserten Verschleißeigenschaften gemäß einem der vorstehenden Ansprüche, wobei der untere mittleren Krümmungsradius $R_m$ größer ist als der obere Krümmungsradius Ro, bevorzugt 2 bis 20 mal so groß ist wie Ro und weiter bevorzugt mindestens 4 bis 10 mal so groß ist als Ro.

8. Kolbenring mit verbesserten Verschleißeigenschaften gemäß einem der vorstehenden Ansprüche, wobei ein Winkel $\alpha$ zwischen einer Axialrichtung und einer gemittelten Tangente des mittleren Bereichs zwischen -4 und +4°, bevorzugt zischen 0° und 4° und weiter bevorzugt zwischen 2° und 4° beträgt.

9. Kolbenring mit verbesserten Verschleißeigenschaften gemäß einem der vorstehenden Ansprüche, wobei ein Winkel $\beta$ zwischen einer Axialrichtung und einer gemittelten Tangente des oberen Bereichs größer gleich einer Summe aus einem Winkel $\alpha$ zwischen einer Axialrichtung und einer gemittelten Tangente des mittleren Bereichs und einem Wert $\delta$ ist, der zwischen 30' bis 180' beträgt.

10. Kolbenring/Kolbenringnut-Kombination, wobei der Kolbenring ein Kolbenring mit verbesserten Verschleißeigenschaften gemäß Anspruch 8 oder 9 ist, wobei ein Betrag des Winkels ($\alpha$) kleiner gleich einem maximalen Twistwinkel des Kolbenrings in der Kolbenringnut ist.

**Claims**

1. Piston ring with improved wear properties,
   wherein the piston ring has a running surface, an upper ring flank, a lower ring flank and an inner surface
   wherein the piston ring has a radius R,
   wherein a running surface contour comprises an upper region, a middle region and a lower region in a radial section,
   **characterized in that**
   the running surface contour has an upper transition region between the upper region and the middle region and a lower transition region between the middle region and the lower region in the radial section,
   wherein the upper region and the upper transition region each form parts of toroidal surfaces, the upper region of the running surface contour has a radius of curvature $R_0$ which is between the ring radius R and infinity,
   the middle region of the running surface contour has a radius of curvature $R_m$ which is between the ring radius R and infinity,
   the lower region has a radius of curvature $R_u$ which is smaller than the ring radius R,
   the upper transition region has a fillet radius $R_{ü,om}$ which is between 1/30 and 1/10 of the ring height h,
   the lower transition region has a fillet radius $R_{ü,mu}$ which is between 1/30 and 1/10 of the ring height h.

2. Piston ring with improved wear properties according to claim 1,
   **characterized in that** a mean tangent angle $\beta$ of the upper region of the running surface contour is 2 to 40 times, preferably 4 to 30 times and more preferably 10 to 20 times as large as a mean tangent angle $\alpha$ of the middle region.

3. Piston ring with improved wear properties according to claim 1 or 2,
   **characterized in that** the upper region of the running surface contour has a radius of curvature $R_o$ which is between the ring radius R and 4R, the middle region of the running surface contour has a radius of curvature $R_m$ which is between the ring radius R and 4R, the lower region has a radius of curvature $R_u$ which is smaller than 1/2 R.

4. Piston ring with improved wear properties according to claim 1, 2 or 3,
   **characterized in that** the upper region of the running surface contour has a radius of curvature $R_o$ which is between the ring radius R and 2R, the middle region of the running surface contour has a radius of curvature $R_m$ which is between the ring radius R and 2R, the lower region has a radius of curvature $R_u$ which is smaller than a ring height h.

5. Piston ring with improved wear properties according to one of the preceding claims, **characterized in that** the upper region of the running surface contour has a radius of curvature $R_o$ which is between the ring radius R and 1.5R, the middle region of the running surface contour has a radius of curvature $R_m$ which is between the ring radius R and 1.5R, the lower region has a radius of curvature $R_u$ which is smaller than half a ring height h.

6. Piston ring with improved wear properties according to one of the preceding claims, wherein the lower radius of curvature $R_u$ is larger than the fillet radius $R_{ü,mu}$ and / or $R_{ü,om}$, preferably at least 5 times as large as $R_{ü,mu}$ and / or $R_{ü,om}$ and more preferably at least 10 times as large as $R_{ü,mu}$ and / or $R_{ü,om}$.

7. Piston ring with improved wear properties according to one of the preceding claims, wherein the lower mean radius of curvature $R_m$ is larger than the upper radius of curvature $R_o$, preferably 2 to 20 times as large as $R_o$ and more preferably at least 4 to 10 times as large as $R_o$.

8. Piston ring with improved wear properties according to one of the preceding claims, wherein an angle $\alpha$ between an axial direction and an averaged tangent of the middle region is between -4°and +4°, preferably between 0° and 4 °and more preferably between 2 °and 4 °.

9. Piston ring with improved wear properties according to one of the preceding claims, wherein an angle $\beta$ between an axial direction and an averaged tangent of the upper region is larger than or equal to a sum of an angle $\alpha$ between an axial direction and an averaged tangent of the middle region and a value $\delta$ which is between 30 ' and 180 '.

10. Piston ring / piston ring groove combination, wherein the piston ring is a piston ring with improved wear properties according to claim 8 or 9, wherein a magnitude of the angle (a) is smaller than or equal to a maximum twist angle of the piston ring in the piston ring groove.


**Revendications**

1. Segment de piston avec des propriétés d'usure améliorées, dans lequel le segment de piston présente une surface de roulement, un flanc de segment supérieur et un flanc de segment inférieur et une surface intérieure,
dans lequel le segment de piston présente un rayon R, dans lequel un contour de surface de roulement dans une section radiale comprend une zone supérieure, une zone centrale et une zone inférieure, **caractérisé en ce que**
le contour de la surface de roulement dans la section radiale entre la zone supérieure et la zone médiane présente une zone de transition supérieure et entre la zone médiane et la zone inférieure une zone de transition inférieure,
dans lequel la zone supérieure et la zone de transition supérieure forment chacune des parties de surfaces de tore,
la zone supérieure du contour de la surface de roulement présente un rayon de courbure $R_o$ compris entre le rayon de l'anneau R et l'infini,
la zone médiane du contour de la bande de roulement présente un rayon de courbure $R_m$ compris entre le rayon de l'anneau R et l'infini,
la zone inférieure présente un rayon de courbure $R_u$ qui est plus petit que le rayon d'anneau R,
la zone de transition supérieure présente un rayon d'arrondi $R_{ü,om}$ , qui est situé entre 1/30 et 1/10 de la hauteur de l'anneau h, la zone de transition inférieure présente un rayon d'arrondi $R_{ü,mu}$ compris qui est situé entre 1/30 et 1/10 de la hauteur de l'anneau h.

2. Segment de piston avec des propriétés d'usure améliorées selon la revendication 1, **caractérisé en ce qu'**un angle tangent moyen $\beta$ de la région supérieure du contour de la surface de roulement est 2 à 40 fois, de préférence 4 à 30 fois et plus préférentiellement 10 à 20 fois plus grand qu'un angle tangent moyen $\alpha$ de l'aire moyenne.

3. Segment de piston avec des propriétés d'usure améliorées selon la revendication 1 ou 2, **caractérisé en ce que** la région supérieure du contour de la surface de roulement présente un rayon de courbure $R_o$ qui se situe entre le rayon de l'anneau R et 4R, la région médiane du contour de la surface de roulement présente un rayon de courbure $R_m$ qui se situe entre le rayon d'anneau R et 4R, la région inférieure présente un rayon de courbure $R_u$ qui est inférieur à 1/2 R.

4. Segment de piston avec des propriétés d'usure améliorées selon la revendication 1, 2 ou 3, **caractérisé en ce que** la région supérieure du contour de la surface de roulement présente un rayon de courbure $R_o$ qui se situe entre le rayon de l'anneau R et 2R, la région médiane du contour de la surface de roulement présente un rayon de courbure $R_m$ qui se situe entre le rayon d'anneau R et 2R, la région inférieure présente un rayon de courbure $R_u$ qui est inférieur à une hauteur d'anneau h.

5. Segment de piston avec des propriétés d'usure améliorées selon une des revendications précédentes, **caractérisé en ce que** la zone supérieure du contour de la surface de roulement présente un rayon de courbure $R_o$ qui se situe entre le rayon de l'anneau R et 1,5R, la région médiane du contour de la surface de roulement présente un rayon de courbure $R_m$ qui se situe entre le rayon de l'anneau R et 1, la région inférieure présente un rayon de courbure $R_u$ qui est inférieur à une demi-hauteur d'anneau h.

6. Segment de piston avec des propriétés d'usure améliorées selon une des revendications précédentes, dans lequel le rayon de courbure inférieur $R_u$ est supérieur au rayon de courbure $R_ü$ et/ou $R_{ü,om}$, est de préférence au moins 5 fois plus grand que $R_{ü,mu}$ et/ou $R_{ü,om}$ et plus préférablement au moins 10 fois plus grand que $R_{ü,mu}$ et/ou $R_{ü,om}$.

7. Segment de piston avec des propriétés d'usure améliorées selon une des revendications précédentes, dans lequel le rayon moyen inférieur de courbure $R_m$ est supérieur au rayon supérieur de courbure $R_o$, de préférence 2 à 20 fois plus grand que $R_o$ et plus préférentiellement au moins 4 à 10 fois plus grand que $R_o$.

8. Segment de piston avec des propriétés d'usure améliorées selon une des revendications précédentes, dans lequel un angle $\alpha$ entre une direction axiale et une tangente moyenne de la région centrale est compris entre -4 et +4°, de préférence entre 0° et 4° et plus préférablement entre 2° et 4°.

9. Segment de piston avec des propriétés d'usure améliorées selon une des revendications précédentes, dans lequel un angle $\beta$ entre une direction axiale et une tangente moyenne de la région supérieure est supérieur ou égal à une somme d'un angle $\alpha$ entre une direction axiale et une tangente moyenne de la région centrale et une valeur comprise entre 30' et 180'.

10. Combinaison segment de piston/rainure de segment de piston, dans lequel le segment de piston présente un segment de piston avec des propriétés d'usure améliorées selon la revendication 8 ou 9, dans laquelle une valeur de l'angle (a) est inférieure ou égale à un angle de torsion maximal du segment de piston dans la rainure du segment de piston.

Fig. 1

Fig. 2

Fig. 3

Fig. 4

**IN DER BESCHREIBUNG AUFGEFÜHRTE DOKUMENTE**

**In der Beschreibung aufgeführte Patentdokumente**

- EP 2045488 A1